# EUROPEAN PATENT APPLICATION

(11) **EP 4 759 722 A1**
(43) Date of publication of application: **17.06.2026**
(21) Application number: 25222526.3
(22) Date of filing: 11.12.2025
(51) Int. Cl.: B64F 5/30, B08B 3/00, F01D 25/00, F02B 77/04

(54) **GAS TURBINE ENGINE CLEANING SYSTEM**

(30) Priority: 13.12.2024 US 202418979877
(71) Applicant: General Electric Company, Cincinnati, Ohio 45215 (US)
(72) Inventor: SIDDAPPA, Shivakumar, 560066 Bengaluru (IN); UMAR FAROOQ, Althaf Hussain, 560066 Bengaluru (IN); SHETTY, Anil, 560066 Bengaluru (IN); JHA, Sanjeev Kumar, 560066 Bengaluru (IN); G, Rajanikanth, 560066 Bengaluru (IN); KUMAR, Sandeep, 560066 Bengaluru (IN); GRAHAM, Andrew Crispin, Altrincham, WA14 2DT (GB); KULKARNI, Ambarish Jayant, Niskayuna, 12309 (US)
(74) Representative: Openshaw & Co.

(57) **Abstract**

An engine cleaning system (10) for a gas turbine engine (100) includes a first foam cartridge (20) containing a first detergent (22), a second foam cartridge (20) containing a second detergent (22), a first foam generating assembly (30) operably coupled to the first foam cartridge (20), the first foam generating assembly (30) being configured to generate and supply a first cleaning foam (34) to a first cleaning port (146) of the gas turbine engine (100), and a second foam generating assembly (30) operably coupled to the second foam cartridge (20), the second foam generating assembly (30) being configured to generate and supply a second cleaning foam (34) to a second cleaning port (146) of the gas turbine engine (100), wherein the second cleaning foam (34) is different than the first cleaning foam (34).

## Description

### CROSS-REFERENCE TO RELATED APPLIATION(S)

This application claims priority to U.S. Utility Application No. 18/979,877 filed December 13, 2024, which is incorporated herein by reference.

### FIELD

The present subject matter relates generally to a cleaning system for a gas turbine engine, and a method for operating the same.

### BACKGROUND

Typical aircraft propulsion systems include one or more gas turbine engines. For certain propulsion systems, the gas turbine engines generally include a fan and a core arranged in flow communication with one another. Additionally, the core of the gas turbine engine generally includes, in serial flow order, a compressor section, a combustor section, a turbine section, and an exhaust section. In operation, air is provided from the fan to an inlet of the compressor section where one or more axial compressors progressively compress the air until it reaches the combustor section. Fuel is mixed with the compressed air and burned within the combustor section to provide combustion gases. The combustion gases are routed from the combustor section to the turbine section. The flow of combustion gases through the turbine section drives the turbine section and is then routed through the exhaust section, e.g., to the atmosphere.

During operation, a substantial amount of air is ingested by such gas turbine engines. However, such air may contain foreign particles. A majority of the foreign particles will follow a gas path through the engine and exit with the exhaust gases. However, at least certain of these particles may stick to certain components within the gas turbine engine's gas path, potentially changing aerodynamic and/or thermal properties of the engine and reducing engine performance.

In order to remove such foreign particles from within the gas path of the gas turbine engine, a cleaning operation can be performed that directs water or other fluids towards an inlet of the gas turbine engine, while the core engine is cranked using, e.g., using a starter motor or a turning tool. However, such cleaning operations are often not tailored to the type of cleaning actually needed in a particular portion of the engine. For example, depending on the prior operating conditions of the gas turbine engine, a quick and simple water wash may be needed. In other situations, a long wash cycle with a wash foam having particular foam characteristics may be needed to properly clean the engine and return it to peak efficiency.

Accordingly, a cleaning system for providing improved and customized cleaning of a gas turbine engine would be useful. More particularly, a cleaning system for providing heated and/or pressurized wash fluid having desired cleaning characteristics at desired locations within the gas turbine engine would be especially beneficial.

### BRIEF DESCRIPTION OF THE DRAWINGS

A full and enabling disclosure of the present invention, including the best mode thereof, directed to one of ordinary skill in the art, is set forth in the specification, which makes reference to the appended figures.
FIG. 1 is a schematic view of a cleaning system for cleaning a gas turbine engine according to an example embodiment of the present subject matter.
FIG. 2 is a perspective view of a docking station of the example cleaning system of FIG. 1 according to an example embodiment of the present subject matter.
FIG. 3 is a schematic view of a foam cartridge of the example cleaning system of FIG. 1 according to an example embodiment of the present subject matter.
FIG. 4 is another schematic view of a cleaning system for cleaning a gas turbine engine according to an example embodiment of the present subject matter.
FIG. 5 provides a method of cleaning a gas turbine engine according to an example embodiment of the present subject matter.

Repeat use of reference characters in the present specification and drawings is intended to represent the same or analogous features or elements of the present invention.

### DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. The terms "forward" and "aft" refer to relative positions within a gas turbine engine, with forward referring to a position closer to an engine inlet and aft referring to a position closer to an engine nozzle or exhaust. The terms "upstream" and "downstream" refer to the relative direction with respect to fluid flow in a fluid pathway. For example, "upstream" refers to the direction from which the fluid flows, and "downstream" refers to the direction to which the fluid flows.

As explained herein, aspects of the present subject matter are generally directed to a system for introducing cleaning foam into a gas turbine engine that uses plug-and-play or modular foam generating assemblies and detergent/foam cartridges. The foam generating assemblies may include three sub-systems: a detergent heater, foam generator, and foam flow controller unit. This modular and mobile cleaning system provides several technical advantages, e.g., such as high portability, lower footprint compared to existing systems, high modularity of the foam wash system, etc.

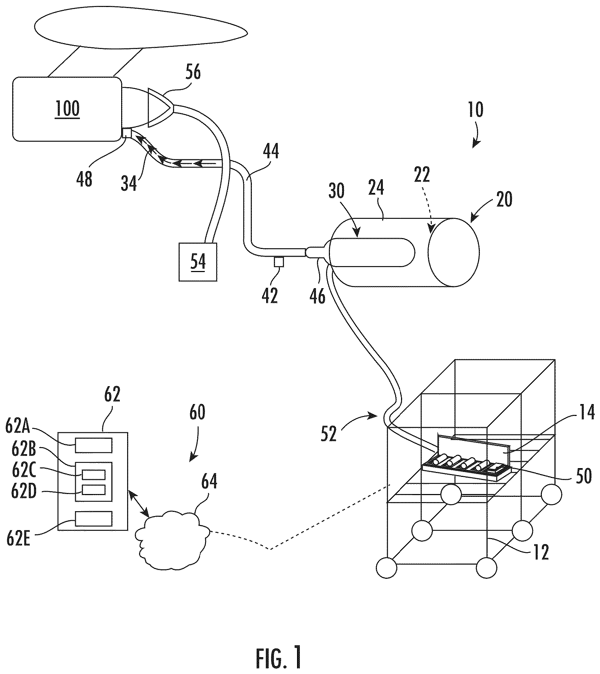

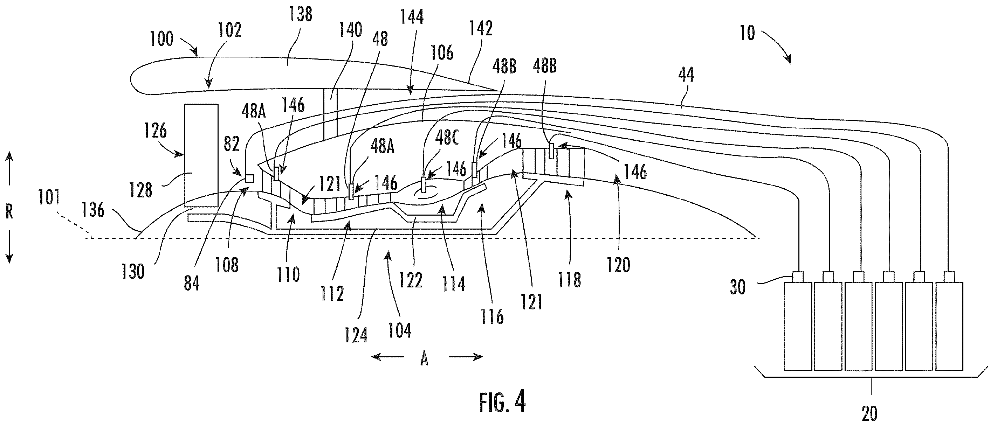

Referring now to the drawings, wherein identical numerals indicate the same elements throughout the figures, FIG. 1 illustrates a cleaning system 10 for a gas turbine engine (e.g., such as gas turbine engine 100 described in more detail below in reference to FIG. 4). In general, cleaning system 10 is generally configured for washing, rinsing, or otherwise cleaning a gas turbine engine, such as a turbofan gas turbine engine (e.g., gas turbine engine 100; see FIG. 4). Additionally, or alternatively, however, cleaning system 10 may be utilized with any other suitable gas turbine engine, such as a turboprop engine, a turboshaft engine, turbojet engine, etc.

Cleaning system 10 may be used to clean gas turbine engines or other machinery, e.g., to remove foreign particles from within the gas path of the gas turbine engine. In addition, as described in more detail below, cleaning system 10 facilitates customizable, tailored cleaning of gas turbine engine 100 based on the type, quantity, location, and chemical makeup of engine deposits or contaminants. Although described as cleaning gas turbine engine 100, it should be appreciated that cleaning system 10 may be used to clean other engines. In addition, variations and modifications to cleaning system 10 may be made while remaining within the scope of the present subject matter.

Referring now generally to FIGS. 1 through 4, according to an example embodiment, cleaning system 10 includes a cleaning cart 12 that is configured for housing some or all components of a cleaning system 10. In this regard, cleaning cart 12 includes a support frame mounted on wheels to improve the mobility of cleaning system 10 and facilitate quick and easy cleaning of gas turbine engine 100. In addition, cleaning cart 12 may include various storage compartments, racks, etc. for storing all equipment necessary for facilitating the quick and easy cleaning of gas turbine engine 100. For example, cleaning system 10 may include a docking station 14 seated on cleaning cart 12 and containing various operating components of cleaning system 10.

Cleaning system 10 may further include a plurality of foam cartridges 20 that contain one or more detergents 22, such as wash additives, cleaning agents, flocculants, additives to collapse foam, corrosion protecting additives, or other products that facilitate a cleaning process of gas turbine engine 100. More specifically, foam cartridge 20 may include a cartridge housing 24 that defines a reservoir for containing detergent 22. These foam cartridges 20 may be supported in a suitable cart, in docking station 14, or at any other suitable location, such that they may be easily transported to a location nearby gas turbine engine 100 to facilitate convenient cleaning. In addition, it should be appreciated that each foam cartridge 20 may be sized to contain a sufficient amount of detergent to complete one or more cleaning cycles of a gas turbine engine. For example, foam cartridges 20 may be configured to hold between 2 and 50 liters of detergent 22, between 3 and 40 liters of detergent 22, between 4 and 30 liters of detergent 22, between 5 and 20 liters of detergent 22, or about 10 liters of detergent 22.

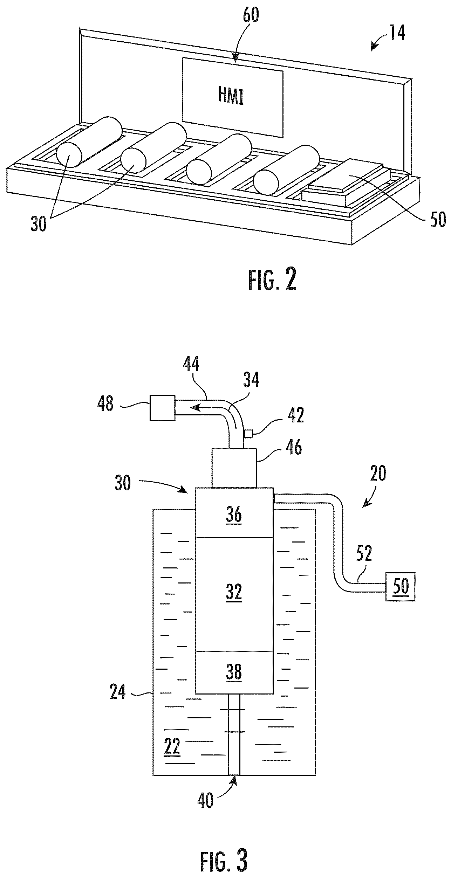

Referring now particularly to FIG. 3, a foam supply module 30 will be described according to an example embodiment of the present subject matter. In this regard, cleaning system 10 may include a modular foam supply module 30 that may be attached to foam cartridges 20 for generating and supplying cleaning foam to clean gas turbine engine. For example, foam supply modules 30 may be supported in docking station 14, e.g., to facilitate easy transport to a cleaning location. Although four foam supply modules 30 are illustrated in FIGS. 1 and 2, it should be appreciated that cleaning system 10 may include any suitable number of foam supply modules 30, each of which may be supported by docking station 14. Specifically, according to an example embodiment, foam supply module 30 may include a foam generating assembly 32 that supplies detergent 22 or a mixture of detergent 22 with water or other additives into gas turbine engine 100 as a flow of cleaning foam (e.g., identified in FIG. 1 by reference numeral 34). According to an example embodiment, foam generating assembly 32 is removably received within the foam cartridge 20, e.g., entirely within cartridge housing 24, and may include a foam generator or other foam generation device.

Although foam supply module 30 is described herein as being received or contained within foam cartridges 20, it should be appreciated that the modularity and versatility of foam supply modules 30 need not be limited to such an implementation. For example, foam supply modules 30 may be connected to a detergent source in any other suitable manner. For example, a supply line may extend from a detergent supply (e.g., such as a foam cartridge 20) and may connect directly to foam supply module 30 (e.g., at detergent heater 38). According to still other example embodiments, foam cartridges 20 may be received directly within a port defined by foam supply module 30. Other fluid connections and configurations are possible and within the scope of the present subject matter.

As illustrated, the foam supply module 30 generally includes a foam flow control unit 36 that is configured to receive a flow of wash liquid and pressurize the flow of wash liquid. The foam flow control unit 36 is configured to be connected to an outlet of foam supply module 30. For example, for the embodiment depicted, the foam flow control unit 36 may include a variable frequency drive motor pump, such that it may operate at various power levels. However, in other embodiments, any other suitable pump may be utilized, including any other suitable type of motor (such as a constant frequency motor).

Moreover, foam supply module 30 may include a detergent heater 38 in thermal communication with the detergent 22 within the foam cartridge 20. Detergent heater 38 may be an electric resistance heater. It should be appreciated, however, that in other embodiments, detergent heater 38 may be configured in any other suitable manner (i.e., as any other suitable kind of heater) for heating the detergent 22 contained within foam cartridge 20 or cleaning foam 34 as it exits foam cartridge 20. For example, according to another embodiment, foam generating assembly 32 or detergent heater 38 may include an in-line heater that provides on-demand heating of a fluid passing through detergent heater 38. Such on-demand heating reduces the preparation time required for conventional wash operations compared to systems that require preheating of the wash fluid, e.g., within a heated storage tank. According to an example embodiment, detergent heater 38 is removably received within the foam cartridge 20, e.g., inserted entirely within cartridge housing 24.

In this regard, a pump such as foam flow control unit 36 of foam supply module 30 may urge a flow of detergent 22 from foam cartridge into foam generating assembly 32. Simultaneously, a stream of air may be supplied to foam generating assembly 32 through a compressed air inlet port 40, e.g., from an external pump or air compressor, from a centralized compressed air source (such as shop air), or from any other suitable source (e.g., such as an inert gas supply). According to an example embodiment, foam generating assembly 32 may include a battery-operated air compressor that may be utilized to generate cleaning foam 34. Foam generating assembly 32 is generally configured for mixing the flow of detergent 22 and the stream of air to aerate the detergent 22 and generate the flow of cleaning foam 34.

In this regard, for example, the flow of cleaning foam 34 includes wash fluid with a desired foam density, or the ratio of air to fluid. The foam may be characterized according to different properties as well. For example, foam generating assembly 32 may be configured for achieving a specific bubble distribution, foam viscosity, etc. The foam characteristics may be manipulated by adjusting a temperature or a flow rate of either the flow of cleaning foam 34 or the stream of air into the foam generating assembly 32. Alternatively, mechanical means may be used to agitate the flow of wash fluid and generate more, smaller bubbles and thus increase foam density. For example, according to an example embodiment, a foaming or aeration system may include three porous aeration devices through which the flow of wash fluid is passed. The porous aeration devices are fluidly coupled in series such that the flow of wash fluid passes successively through each aeration device and the bubble size is progressively refined and/or decreased. It should be appreciated that other aeration devices and configurations are possible and within the scope of the present subject matter.

Cleaning system 10 may further include a foam sensing device 42 configured for measuring one or more of the foam characteristics described above. According to the illustrated embodiment, foam sensing device 42 is positioned downstream of foam flow control unit 36. However, it should be appreciated that foam sensing device 42 may be positioned at any suitable location, e.g., proximate to or upstream of a gas turbine engine 100. Foam sensing device 42 may be configured for measuring the volume and/or weight of the flow of cleaning foam 34 to determine its density, may include optical sensors for detecting air bubble size and distribution, or may measure foam characteristics in any other suitable manner.

After foam supply module 30 generates the cleaning foam 34, it is passed to the engine for cleaning. In this regard, a foam supply hose 44 may be used to direct the cleaning foam 34 into cleaning ports on gas turbine engine 100 (e.g., through borescope ports 146 of gas turbine engine 100). In addition, or alternatively, cleaning ports may include borescope ports 146, ignitor ports, booster inlets, bleed ducts, exhaust nozzles, etc. Specifically, foam supply hose 44 may include a cartridge adapter 46 on one end that is configured for operably coupling with foam supply module 30. On the opposite end of foam supply hose 44 is a port adapter 48 that is configured to engage and seal cleaning ports on the gas turbine engine. Port adapter 48 may include an adjustable spray nozzle for injecting cleaning foam 34. As shown in FIG. 4, multiple foam cartridges 20, foam supply modules 30, and foam supply hoses 44 may be used to supplying cleaning foam 34 to different regions of gas turbine engine 100.

Additionally, as shown, docking station 14 may include features for powering foam supply modules 30 and facilitating user interaction and control over the cleaning process. In this regard, as illustrated, cleaning system 10 may include a battery 50 that is configured for operating cleaning system 10 without the need for direct electrical supply from a mains electricity supply. According to alternative embodiments, docking station 14 may include a power distribution hub that is directly connected to mains electricity. Cleaning system 10 may further include a plurality of electrical power cords 52 that are electrically coupled to battery 50 and extend from docking station 14 to power foam supply modules 30. In this regard, power from battery 50 may be supplied to detergent heater 38, foam generating assembly 32, and/or foam flow control unit 36 through dedicated electrical power cords 52. Additionally, or alternatively, the control system may be a pneumatic control system operated using shop air or another source of compressed air, and some or all of the foam generators, pumps and turning tool may be pneumatically operated and monitored, such that no electrical power supply is required at the cart.

In addition, referring again to FIG. 1, cleaning system 10 may include a collection module 54 which is generally configured to collect and/or recycle waste wash fluid. In this regard, an apron 56 may be used to collect foam and wash fluid after it passes from gas turbine engine 100. According to the illustrated embodiment, apron 56 is a tarp that is positioned underneath gas turbine engine 100. Apron 56 collects the used wash fluid which is returned to collection module 54 for discharge, filtering, and/or reuse. In general, collection module 54 may include a scavenge pump configured for drawing waste fluid from apron 56 and urging it through one or more filters that are configured for remove, dirt, grime, and other effluent from the waste fluid. After the filters remove such effluent, the wash fluid may pass back into gas turbine engine 100 for additional cleaning or back into foam cartridges 20 for future reuse.

Notably, after the cleaning foam 34 exits gas turbine engine 100 during a cleaning process, it may tend to float away in presence of wind. To ensure environmentally friendly disposal of cleaning foam 34, it may be desirable to destabilize the cleaning foam 34 as it exits or is exiting the engine. This destabilization may prevent environmental contamination and facilitate easier collection of the used cleaning foam 34. Accordingly, aspects of the present subject matter are directed to the use of ultraviolet (UV) light to destabilize the cleaning foam 34.

Specifically, collection module 54 may include a UV light that is directed toward cleaning foam 34 as it exits gas turbine engine 100 through apron 56. In this regard, exposure of cleaning foam 34 to UV or visible light may result in shape and polarity switches in the surfactant molecules. This in turn affects several properties including critical micelle concentration, equilibrium surface tension, and the air-to-water interfacial composition. The UV light may be applied to cleaning foam 34 for any suitable amount of time, such as between 1 second and 1 minute, between 5 and 30 seconds, between 10 and 15 seconds, or about 12 seconds. It should be appreciated that the configuration and position of the UV light, as well as operation of the UV light, may vary while remaining within the scope of the present subject matter. In addition, it should be appreciated that collection module 54 and the UV light may be regulated using control system 60 of any other suitable controller or computing device.

Cleaning system 10 may further include a computing device, controller, or control system 60. The control system 60 may include one or more computing device(s) 62. The computing device(s) 62 may include one or more processor(s) 62A and one or more memory device(s) 62B. The one or more processor(s) 62A may include any suitable processing device, such as a microprocessor, microcontroller, integrated circuit, logic device, or other suitable processing device. The one or more memory device(s) 62B may include one or more computer-readable media, including, but not limited to, non-transitory computer-readable media, RAM, ROM, hard drives, flash drives, or other memory devices.

The one or more memory device(s) 62B may store information accessible by the one or more processor(s) 62A, including computer-readable instructions 62C that can be executed by the one or more processor(s) 62A. The instructions 62C can be any set of instructions that when executed by the one or more processor(s) 62A, cause the one or more processor(s) 62A to perform operations. The instructions 62C may be software written in any suitable programming language or can be implemented in hardware. In some embodiments, the instructions 62C may be executed by the one or more processor(s) 62A to cause the one or more processor(s) 62A to perform operations, such as the washing operations of a gas turbine engine, as described herein, and/or any other operations or functions of the one or more computing device(s) 62. Additionally, and/or alternatively, the instructions 62C may be executed in logically and/or virtually separate threads on processor 62A. The memory device(s) 62B can further store data 62D that can be accessed by the processors 62A.

The computing device(s) 62 can also include a communications interface 62E used to communicate, for example, with the other components of cleaning system 10. The communications interface 62E may include any suitable components for interfacing with one more communications network(s), including for example, transmitters, receivers, ports, controllers, antennas, or other suitable components. Control system 60 may also be in communication (e.g., via communications interface 62E) with cleaning system 10, described below, and may selectively operate the cleaning system 10 in response to user input and feedback from cleaning system 10. More specifically, for the embodiment depicted, the control system 60 is configured to communicate through a wireless communication network 64 through communications interface 62E, such that the control system 60 may send or receive information and/or commands to or from cleaning system 10 wirelessly. It should be appreciated, however, that in other embodiments, the control system 60 may additionally, or alternatively, use a wired communication bus to communicate with cleaning system 10 (e.g., along with all components of cleaning system 10).

The technology discussed herein makes reference to computer-based systems and actions taken by and information sent to and from computer-based systems. It should be appreciated that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel. For example, although the example control system 60 is depicted as including a separate computing device 62, in certain embodiments, the computing device 62 may be included within, e.g., cleaning system 10, an onboard computing device of an aircraft, a controller of a gas turbine engine, etc.

As noted above, foam cartridges 20 may contain any suitable type and quantity of detergents 22. Notably, it may be desirable to tailor the detergent 22 characteristics based on a variety of factors associated with gas turbine engine 100. In this regard, for example, contaminant deposits in gas turbine engines may be baked onto the blades at different temperatures, e.g., depending where they are in the engine (e.g., generally, cooler at the forward end and hotter at the aft end). In addition, deposit compositions may vary based on operating conditions of the aircraft, such as based on the routes flown by an operator, resulting in predictable region-specific deposits. Deposits may vary based on other factors as well. Accordingly, the resulting deposits may be both physically and chemically different and may be more effectively cleaned by using a localized, tailored detergent or cleaning agent. Below are examples of potential variations in detergent 22 makeup, though it should be appreciated that these are only examples and are not intended to limit the scope of the present subject matter in any manner.

For example, cleaning system 10 may utilize foam cartridges 20 having any suitable type and quantity of detergents 22. For example, detergent 22 in a first foam cartridge 20 may have a different chemistry than detergent 22 in a second foam cartridge 20. In addition, or alternatively, detergent 22 in a first foam cartridge 20 may have a different pH than detergent 22 in a second foam cartridge 20. For example, the pH may be tailored based on the engine contaminants or the number of wash cycles needed, e.g., between an aggressive wash (e.g., a low pH around 5.5) or less aggressive (e.g., such as a pH of 6.5). These chemistries and pHs may be selected based on the type or severity of the deposits expected within a particular region of the gas turbine engine 100.

In addition, the concentration of detergent 22 supplied to gas turbine engine 100 may vary based on similar factors. For example, foam generating assembly 32 may be configured to modify the concentration of detergent 22 in the cleaning foam 34 supplied from any particular foam cartridge 20. Specifically, a first detergent and a second detergent have a common chemistry (e.g., same chemical make-up), while the first detergent and the second detergent have different concentrations. For example, foam generating assembly 32 may adjust concentrations by supplying an additive, mixing in a diluting liquid, or adjusting a flow rate of air (or other suitable fluid, such as inert gas) supplied with the detergent 22. Other manners of adjusting concentration are possible and within the scope of the present subject matter.

In addition, each foam cartridge 20 may include various additives to facilitate an improved cleaning process, e.g., based on engine operating characteristics, deposit sampling and analysis, etc. For example, certain detergents may include additive that helps to collapse cleaning foam 34 while it is still in gas turbine engine 100 (e.g., particularly in the final or aft stages of the engine). These additives may include a flocculation additive to start to clump the effluent solids, in preparation for filtering and recycling (re-use) of detergent 22. According to still other embodiments, a foam cartridge 20 may include a corrosion resistant additive or a dust shedding additive, which may be particularly beneficial when applied toward an end of the wash process. In this regard, for example, a first detergent may be injected to clean deposits on the internal surfaces of the gas turbine engine and a second detergent may be applied at the end of the wash process to deposit a corrosion resistant additive.

It should be appreciated that cleaning system 10 as described herein may allow for a more versatile cleaning system for a gas turbine engine, such as gas turbine engine 100. For example, utilizing foam cartridges 20 that are interchangeable or quickly replaceable may allow for extended washing operations, without having to refill a wash tank and wait for the wash liquid in such wash tank to heat up to a desired temperature. Instead, once all of a wash liquid within a given foam cartridge 20 has been utilized by the cleaning system 10, a second foam cartridge 20 (having the same or different chemistry, pH, concentration, etc.) may be fluidly connected to the foam supply module 30 to allow for the washing operations to continue with minimal interruption. Similarly, utilizing a foam supply module 30 that is interchangeable with various foam cartridges 20, e.g. cleaning system 10 may allow for multiple wash operations to be completed on a given gas turbine engine without requiring two completely separate wash systems. In addition, according to example embodiments of the present subject matter, a power module could be configured for providing compressed air and/or electrical power, e.g., when cleaning system 10 is used in a location where such facilities are inconvenient or unavailable.

Additionally, as stated, the example wash system may be controlled through a control system in communication with a wireless network. Accordingly, the control system may be operably connected to the various modules through a wireless communication network, and further, may receive control signals/commands through a wireless communication network. Such a configuration may allow for an operator located remotely from the wash system, such as an operator within a cockpit of an aircraft, to wirelessly control certain aspects of the wash system.

It should be appreciated, that as used herein the term "fluid," "wash fluid," "wash liquid," and the like may refer to any suitable fluid for performing washing operations and/or rinsing the gas turbine engine. Such wash fluid is typically made up of water that may include other additives such as detergent or other treatments. For example, the wash fluid may refer to water, or a combination of water and detergent, soap, and/or other additives. Moreover, cleaning system 10 is not limited to utilizing water or any particular detergent as a wash fluid. It will be understood by one skilled in the art that while the term "wash" is often used to describe a wet process involving a liquid or foam washing medium, in the context of the present disclosure it is intended to encompass all cleaning processes which require rotation of the gas turbine engine during the cleaning process including, without limitation, water wash, foam wash, abrasive media cleaning, dry ice (carbon dioxide) blasting, frozen liquid media cleaning exhibiting a phase change during the wash, laser ablative cleaning, and the like. Instead, cleaning system 10 may utilize any suitable wash liquid for performing desired washing operations of the gas turbine engine.

Referring now to FIG. 4, a schematic view of cleaning system 10 in accordance with an example embodiment of the present disclosure is depicted, being utilized in washing operations of a gas turbine engine. In certain example embodiments, the cleaning system 10 of FIG. 4 may be configured in substantially the same manner as example cleaning system 10 described in FIGS. 1 through 3. For example, the example cleaning system 10 generally includes detergent heater 38 for heating detergent 22, foam generating assembly 32 for generating cleaning foam 34 from detergent, and foam flow control unit 36 for directing cleaning foam 34 from foam supply module 30.

As stated, the example cleaning system 10 being utilized in the embodiment depicted in FIG. 4 in washing operations of a gas turbine engine, also depicted schematically. The example gas turbine engine depicted is configured as a high bypass turbofan engine, referred to herein as "gas turbine engine 100." As is depicted, the example gas turbine engine 100 defines an axial direction A (extending parallel to a longitudinal centerline 101 provided for reference), a radial direction R, and a circumferential direction (extending about the axial direction A). Additionally, the gas turbine engine 100 includes a fan section 102 and a turbine engine 104 disposed downstream from the fan section 102. The example turbine engine 104 depicted generally includes a substantially tubular outer casing 106 that defines an annular inlet 108. The outer casing 106 encases, in serial flow relationship, a compressor section including a second, booster or low pressure (LP) compressor 110 and a first, high pressure (HP) compressor 112; a combustor section 114; a turbine section including a first, high pressure (HP) turbine 116 and a second, low pressure (LP) turbine 118; and a jet exhaust nozzle section 120. The compressor section, combustor section 114, and turbine section together define a core air flowpath 121 extending from the annular inlet 108 through the LP compressor 110, HP compressor 112, combustor section 114, HP turbine 116 section 116, LP turbine section 118 and jet nozzle exhaust section 120. A first, high pressure (HP) shaft or spool 122 drivingly connects the HP turbine 116 to the HP compressor 112. A second, low pressure (LP) shaft or spool 124 drivingly connects the LP turbine 118 to the LP compressor 110.

For the embodiment depicted, the fan section 102 includes a fan 126 having a plurality of fan blades 128 coupled to a disk 130 in a spaced apart manner. As depicted, the fan blades 128 extend outwardly from disk 130 generally along the radial direction R. In certain example aspects, the fan 126 may be a variable pitch fan, such that each of the plurality of fan blades 128 are rotatable relative to the disk about a pitch axis, by virtue of the plurality of fan blades being operatively coupled to an actuation member.

Referring still to the example embodiment of FIG. 4, the disk 130 is covered by rotatable front hub 136 aerodynamically contoured to promote an airflow through the plurality of fan blades 128. Additionally, the example fan section 102 includes an annular fan casing or outer nacelle 138 that circumferentially surrounds the fan 126 and/or at least a portion of the turbine engine 104. The nacelle 138 is supported relative to the turbine engine 104 by a plurality of circumferentially-spaced outlet guide vanes 140. A downstream section 142 of the nacelle 138 extends over an outer portion of the turbine engine 104 so as to define a bypass airflow passage 144 therebetween.

Referring still to FIG. 4, the fan blades 128, disk 130, and front hub 136 are together rotatable about the longitudinal centerline 101 directly by the LP spool 124. Accordingly, for the embodiment depicted, the gas turbine engine 100 may be referred to as a "direct drive" turbofan engine. However, in other embodiments, the gas turbine engine 100 may additionally include a reduction gearbox for driving the fan 126 at a reduced rotational speed relative to the LP spool 124.

Throughout the gas turbine engine 100, the turbine engine 104 defines a plurality of borescope ports 146. Specifically, for the embodiment depicted, the turbine engine 104 includes one or more borescope ports 146 defined in the compressor section, in the combustor section 114, and in the turbine section. More specifically, still, for the embodiment depicted, the turbine engine 104 includes one or more borescope ports 146 defined in the LP compressor 110, the HP compressor 112, a combustion chamber of the combustor section 114, the HP turbine 116, and the LP turbine 118. The borescope ports 146 may allow for inspection of the turbine engine 104 between operations, and more specifically, may open into the core air flowpath 121 of the gas turbine engine 100 to allow for inspection of, e.g., one or more blades, nozzles, or combustion liners of the gas turbine engine 100 between operations. By contrast, during normal operations, the borescope ports 146 within the combustor section 114 and turbine section may be plugged with a borescope port plug (not shown), such that the borescope ports 146 do not affect operation of the gas turbine engine 100.

Moreover, as previously stated, the example gas turbine engine 100 is depicted schematically as being cleaned by the foam supply module 30 of the cleaning system 10. More specifically, the foam supply module 30 of the cleaning system 10 further includes a plurality of port adapters 48, each of the plurality of port adapters 48 attached to a respective foam supply hose 44 and configured for extending at least partially into or through one of the borescope ports 146 of the gas turbine engine 100 for providing at least a portion of the flow of the pressurized wash liquid to the gas turbine engine 100. More specifically, the plurality of port adapters 48 may provide at least a portion of the flow of pressurized wash liquid directly to the core air flowpath 121 of the turbine engine 104, at a location downstream from the inlet 108. It should be appreciated, that in certain embodiments, the plurality of port adapters 48 may extend at least partially into or through borescope ports 146 of the gas turbine engine 100 at locations spaced along, e.g., the circumferential direction of the gas turbine engine 100. Such a configuration may allow for a more even cleaning of the gas turbine engine 100, or rather of the turbine engine 104, during such wash operations.

Referring still to FIG. 4, for the embodiment depicted, the plurality of port adapters 48 includes a compressor spray nozzle 48A for extending at least partially into or through one of the borescope ports 146 defined in the compressor section of the gas turbine engine 100, as well as a turbine spray nozzle 48B for extending at least partially into or through one of the borescope ports 146 defined in the turbine section of the gas turbine engine 100. Further, for the embodiment depicted, the plurality of port adapters 48 includes a combustor section spray nozzle 48C for extending at least partially into or through one of the borescope ports 146 defined in a combustion chamber of the combustor section 114 of the gas turbine engine.

More specifically, for the embodiment depicted, the compressor spray nozzle 48A includes a plurality of compressor port adapters 48 (a first plurality of port adapters 48 positioned within borescope ports 146 in a first region of the gas turbine engine 100), with at least one spray nozzle 48A extending into or through a borescope port 146 defined in the LP compressor 110 and at least one spray nozzle 48A extending into or through a borescope port 146 defined in the HP compressor 112. Further, for the embodiment depicted, the turbine spray nozzle 48B includes a plurality of turbine port adapters 48 (a second plurality of port adapters 48 positioned within borescope ports 146 in a second region of the gas turbine engine 100), with at least one spray nozzle 48B extending into or through a borescope port 146 defined in the HP turbine 116 and at least one spray nozzle 48B extending into or through a borescope port 146 defined in the LP turbine 118.

Additionally, the example cleaning system 10 further includes an inlet nozzle assembly 82 fluidly connected to one or more of the plurality of foam supply hoses 44 for providing at least a portion of the flow of pressurized wash liquid to the gas turbine engine 100, or rather to the turbine engine 104, through the inlet 108 of the turbine engine 104. As is depicted, the inlet nozzle assembly 82 includes one or more inlet nozzles 84 positioned proximate the inlet 108 to the turbine engine 104 to spray wash liquid directly into and through the inlet 108 of the turbine engine 104. In other example embodiments, however, the inlet nozzle assembly 82 may instead be located at least partially forward of the fan 126.

Referring still to FIG. 4, as noted above, the example gas turbine engine 100 includes the outer nacelle 138 which defines the bypass passage 144 with the turbine engine 104. For the embodiment depicted, the plurality of foam supply hoses 44 extend from an aft end of the turbine engine 104, through the bypass passage 144 to each of the respective plurality of borescope ports 146, and to the inlet 108 for the inlet nozzle assembly 82. With such a configuration, the cleaning system 10 may operate without having to remove one or more portions of the fan section 102. More specifically, a wash system having such a configuration may allow for conducting washing operations (i.e., providing pressurized wash liquid through the plurality of wash lines and wash nozzles), while allowing for the turbofan engine to be cranked or rotated using, e.g., a starter motor or turning tool (not shown), to increase in effectiveness of the washing operations. In addition, a controller, such as a system controller or control system 60, can automatically control the speed of the engine core rotation to improve cleaning performance or to prevent unwanted wash fluid intrusion into internal engine air circuits or other passageways. Moreover, such a controller can be configured for monitoring motor torque, e.g., to protect gearbox components.

Utilizing a wash system in accordance with one or more of the example embodiments described herein may allow for more efficient cleaning of the gas turbine engine. More specifically, providing a wash liquid directly to a core air flowpath of the turbine engine of the gas turbine engine may allow the wash system to provide such portions with heated and pressurized wash liquid. By contrast to prior configurations, in which wash liquid is provided solely at an inlet to the turbine engine (in which case such wash liquid may be neither pressurized nor heated by the time it reaches e.g., a turbine section), providing wash liquid directly to e.g., a turbine section of the turbine engine may allow the wash system to provide heated and pressurized wash liquid to such section. Moreover, the duration of the cleaning cycle may be adjusted, the density of the cleansing foam may be altered, and other adjustments to the cleaning cycle may be adjusted to improve cleaning efficiency.

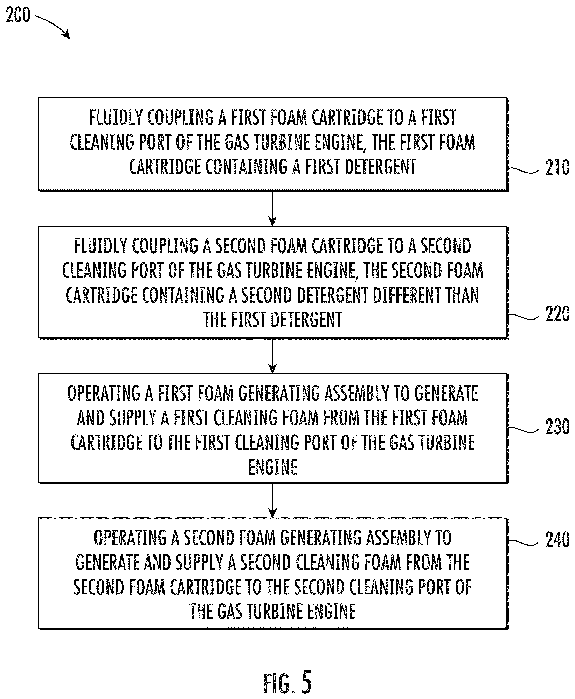

Referring now to FIG. 5, a method 200 for washing a turbine engine is provided according to an example embodiment of the present subject matter. It should be appreciated that one or more of the method steps described herein may be performed by any suitable controller or computing device, e.g., such as control system 60. In at least certain example aspects, the method 200 may be utilized with cleaning system 10 as described above with reference to FIGS. 1 through 4. Moreover, in certain example aspects, the method 200 may be utilized for washing a turbine engine configured in a manner similar to the example gas turbine engine 100 and turbine engine 104 described above. Accordingly, the turbine engine may include a compressor section, a combustor section, and a turbine section. Further, the turbine engine may define a plurality of borescope ports located within one or more of the compressor section, combustor section, and turbine section.

Method 200 includes, at step 210, fluidly coupling a first foam cartridge to a first cleaning port of the gas turbine engine, where the first foam cartridge contains a first detergent. Step 220 includes fluidly coupling a second foam cartridge to a second cleaning port of the gas turbine engine. The second foam cartridge contains a second detergent different than the first detergent. In this regard, as explained above, first detergent and second detergent may vary in terms of compositions, chemistry, concentration, pH, etc. This allows cleaning foam to be generated at different locations and times during an engine wash process that are particularly tailored to the cleaning needed at that time and location.

In this regard, to fluidly couple a foam cartridge, a technician may pick up the appropriate foam cartridge or otherwise move it near the desired engine location, e.g., using a cleaning cart. The technician may then install a foam generating assembly and/or heater into or directly onto the foam cartridge. For example, the foam generating assembly and the heater may be an integrated unit that is received within foam cartridge (e.g., the foam supply module 30). The opposite end of the foam generating assembly may include a cartridge adapter that is then coupled to a foam supply hose. A discharge end of the foam supply hose may include a port adapter for attaching to a borescope inspection port of the gas turbine engine.

Step 230 may include operating a first foam generating assembly to generate and supply a first cleaning foam from the first foam cartridge to the first cleaning port of the gas turbine engine. Step 240 may include operating a second foam generating assembly to generate and supply a second cleaning foam from the second foam cartridge to the second cleaning port of the gas turbine engine. In this regard, for example, the cleaning system may be directly electrically coupled to a mains electricity supply or may have a battery (e.g., located on the cleaning cart). The technician may power the heater, the foam generating assembly, and the foam control unit by connecting them to the battery, e.g., via an electrical cord.

A system controller may then regulate the operation of each of the heaters, foam generating assemblies, and foam control units to independently and selectively dispense cleaning foam from different cartridges at the desired times and locations. For example, the first cleaning foam may be supplied to the first cleaning port before the second cleaning foam is supplied to the second cleaning port, or vice versa. Indeed, although only two cartridges are described as supplying two ports, it should be appreciated that the cleaning system can provide any suitable number of cleaning foams, having any suitable detergent characteristics, to any suitable number of cleaning ports, and in any suitable spatial or temporal sequence as desired for a particular cleaning operation.

For example, method 200 may further include determining a set of wash cycle parameters based at least in part on the one or more operating characteristics of the gas turbine engine. As used herein, "wash cycle parameters" may refer to the type of wash cycle performed, the type of wash fluid used, or any other parameter that may be used to adjust the effectiveness of the wash cycle. For example, the wash cycle parameters may include a magnitude, a velocity, a pressure, a temperature, and a spray duration of the flow of foamed wash fluid. According to an example embodiment, the wash cycle parameters may further include time delays during the wash cycle. For example, a wash cycle parameter may include a time delay after rinsing an engine with water or wash fluid, e.g., to let the water or wash fluid soak or saturate a region of the engine, to allow the detergent to break down dirt or grime, etc.

FIG. 5 depicts steps performed in a particular order for purposes of illustration and discussion. Those of ordinary skill in the art, using the disclosures provided herein, will understand that the steps of any of the methods discussed herein can be adapted, rearranged, expanded, omitted, or modified in various ways without deviating from the scope of the present disclosure. Moreover, although aspects of method 200 are explained using gas turbine engine 100 and cleaning system 10 as an example, it should be appreciated that this method may be applied to the cleaning of any suitable engine using any suitable wash system.

Further aspects are provided by the subject matter of the following clauses:

An engine cleaning system for a gas turbine engine, the engine cleaning system comprising: a first foam cartridge containing a first detergent; a second foam cartridge containing a second detergent; a first foam generating assembly operably coupled to the first foam cartridge, the first foam generating assembly being configured to generate and supply a first cleaning foam to a first cleaning port of the gas turbine engine; and a second foam generating assembly operably coupled to the second foam cartridge, the second foam generating assembly being configured to generate and supply a second cleaning foam to a second cleaning port of the gas turbine engine, wherein the second cleaning foam is different than the first cleaning foam.

An engine cleaning system for a gas turbine engine, the engine cleaning system comprising: a first foam cartridge containing a first detergent; a second foam cartridge containing a second detergent different than the first detergent; a first foam generating assembly operably coupled to the first foam cartridge, the first foam generating assembly being configured to generate and supply a first cleaning foam to a first cleaning port of the gas turbine engine; and a second foam generating assembly operably coupled to the second foam cartridge, the second foam generating assembly being configured to generate and supply a second cleaning foam to a second cleaning port of the gas turbine engine.

The engine cleaning system of any preceding clause, wherein the first detergent has a first chemistry and the second detergent has a second chemistry different than the first chemistry.

The engine cleaning system of any preceding clause, wherein the first detergent has a first concentration and the second detergent has a second concentration different than the first concentration.

The engine cleaning system of any preceding clause, wherein the first detergent and the second detergent have a common chemistry, the first detergent has a first concentration, and the second detergent has a second concentration different than the first concentration.

The engine cleaning system of any preceding clause, wherein the first foam generating assembly is configured to adjust the first concentration of the first cleaning foam by supplying an additive, mixing in a diluting liquid, or adjusting a flow rate of air supplied with the first detergent.

The engine cleaning system of any preceding clause, wherein the first detergent has a first pH and the second detergent has a second pH different than the first pH.

The engine cleaning system of any preceding clause, wherein at least one of the first detergent or the second detergent comprises a flocculation additive.

The engine cleaning system of any preceding clause, wherein at least one of the first detergent or the second detergent comprises a corrosion resistant additive or a dust shedding additive.

The engine cleaning system of any preceding clause, wherein the first cleaning foam is supplied to the first cleaning port before the second cleaning foam is supplied to the second cleaning port.

The engine cleaning system of any preceding clause, wherein the first foam generating assembly is removably received within the first foam cartridge and the second foam generating assembly is removably received within the second foam cartridge.

The engine cleaning system of any preceding clause, wherein the first foam generating assembly comprises a first detergent heater for selectively heating the first detergent and the second foam generating assembly comprises a second detergent heater for selectively heating the second detergent.

The engine cleaning system of any preceding clause, wherein the first foam generating assembly comprises a first foam generator configured to generate the first cleaning foam from the first detergent and the second foam generating assembly comprises a second foam generator configured to generate the second cleaning foam from the second detergent.

The engine cleaning system of any preceding clause, further comprising: a docking station for removably receiving the first foam cartridge and the second foam cartridge; a first electrical power cord extending from the docking station to power the first foam generating assembly; and a second electrical power cord extending from the docking station to power the second foam generating assembly.

The engine cleaning system of any preceding clause, further comprising: a battery mounted to the docking station for supplying power to the first foam generating assembly through the first electrical power cord and to the second foam generating assembly through the second electrical power cord.

The engine cleaning system of any preceding clause, further comprising: a first cartridge adapter configured to removably receive the first foam generating assembly; and a first foam supply hose extending from the first cartridge adapter for directing the first cleaning foam, wherein the first foam supply hose terminates at a borescope port adapter configured for receipt within the first cleaning port of the gas turbine engine.

The engine cleaning system of any preceding clause, wherein the first foam cartridge comprises a first cartridge housing, and wherein the first foam generating assembly and a first detergent heater are removably contained within the first cartridge housing.

The engine cleaning system of any preceding clause, wherein the first foam cartridge is configured to hold between 5 and 20 liters of the first detergent and the second foam cartridge is configured to hold between 5 and 20 liters of the second detergent.

The engine cleaning system of any preceding clause, wherein the first foam cartridge is configured to hold between 20 and 30 liters of the first detergent and the second foam cartridge is configured to hold between 20 and 30 liters of the second detergent.

The engine cleaning system of any preceding clause, further comprising a collection module that includes an ultraviolet (UV) light that is directed toward the cleaning foam as it exits the gas turbine engine.

A method for operating an engine cleaning system to clean a gas turbine engine, the method comprising: fluidly coupling a first foam cartridge to a first cleaning port of the gas turbine engine, the first foam cartridge containing a first detergent; fluidly coupling a second foam cartridge to a second cleaning port of the gas turbine engine, the second foam cartridge containing a second detergent; operating a first foam generating assembly to generate and supply a first cleaning foam from the first foam cartridge to the first cleaning port of the gas turbine engine; and operating a second foam generating assembly to generate and supply a second cleaning foam from the second foam cartridge to the second cleaning port of the gas turbine engine, wherein the second cleaning foam is different than the first cleaning foam.

A method for operating an engine cleaning system to clean a gas turbine engine, the method comprising: fluidly coupling a first foam cartridge to a first cleaning port of the gas turbine engine, the first foam cartridge containing a first detergent; fluidly coupling a second foam cartridge to a second cleaning port of the gas turbine engine, the second foam cartridge containing a second detergent different than the first detergent; operating a first foam generating assembly to generate and supply a first cleaning foam from the first foam cartridge to the first cleaning port of the gas turbine engine; and operating a second foam generating assembly to generate and supply a second cleaning foam from the second foam cartridge to the second cleaning port of the gas turbine engine.

The method of any preceding clause, wherein fluidly coupling the first foam cartridge to the first cleaning port of the gas turbine engine comprises: inserting the first foam generating assembly into the first foam cartridge; and connecting a cartridge adapter and a foam supply hose between the first foam cartridge and the first cleaning port of the gas turbine engine.

The method of any preceding clause, further comprising: connecting a first electrical power cord between a power supply on a docking station and the first foam generating assembly; and connecting a second electrical power cord between the power supply on the docking station and the second foam generating assembly.

The method of any preceding clause, wherein the first detergent is different from the second detergent with respect to at least one of a detergent chemistry, a detergent concentration, or a detergent pH.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. An engine cleaning system (10) for a gas turbine engine (100), the engine cleaning system (10) comprising:
a first foam cartridge (20) containing a first detergent (22);
a second foam cartridge (20) containing a second detergent (22);
a first foam generating assembly (30) operably coupled to the first foam cartridge (20), the first foam generating assembly (30) being configured to generate and supply a first cleaning foam (34) to a first cleaning port (146) of the gas turbine engine (100); and
a second foam generating assembly (30) operably coupled to the second foam cartridge (20), the second foam generating assembly (30) being configured to generate and supply a second cleaning foam (34) to a second cleaning port (146) of the gas turbine engine (100), wherein the second cleaning foam (34) is different than the first cleaning foam (34).

2. The engine cleaning system (10) of claim 1, wherein the first detergent (22) has a first chemistry and the second detergent (22) has a second chemistry different than the first chemistry.

3. The engine cleaning system (10) of claim 1, wherein the first detergent (22) and the second detergent (22) have a common chemistry, the first detergent (22) has a first concentration, and the second detergent (22) has a second concentration different than the first concentration.

4. The engine cleaning system (10) of claim 3, wherein the first foam generating assembly (30) is configured to adjust the first concentration of the first cleaning foam (34) by supplying an additive, mixing in a diluting liquid, or adjusting a flow rate of air supplied with the first detergent (22).

5. The engine cleaning system (10) of any preceding claim, wherein the first detergent (22) has a first pH and the second detergent (22) has a second pH different than the first pH.

6. The engine cleaning system (10) of any preceding claim, wherein at least one of the first detergent (22) or the second detergent (22) comprises a flocculation additive.

7. The engine cleaning system (10) of any preceding claim, wherein at least one of the first detergent (22) or the second detergent (22) comprises a corrosion resistant additive or a dust shedding additive.

8. The engine cleaning system (10) of any preceding claim, wherein the first cleaning foam (34) is supplied to the first cleaning port (146) before the second cleaning foam (34) is supplied to the second cleaning port (146).

9. The engine cleaning system (10) of any preceding claim, wherein the first foam generating assembly (30) is removably received within the first foam cartridge (20) and the second foam generating assembly (30) is removably received within the second foam cartridge (20).

10. The engine cleaning system (10) of any preceding claim, wherein the first foam generating assembly (30) comprises a first detergent (22) heater for selectively heating the first detergent (22) and the second foam generating assembly (30) comprises a second detergent (22) heater for selectively heating the second detergent (22).

11. The engine cleaning system (10) of any preceding claim, wherein the first foam generating assembly (30) comprises a first foam generator (32) configured to generate the first cleaning foam (34) from the first detergent (22) and the second foam generating assembly (30) comprises a second foam generator (32) configured to generate the second cleaning foam (34) from the second detergent (22).

12. The engine cleaning system (10) of any preceding claim, further comprising:
a docking station (14) for removably receiving the first foam cartridge (20) and the second foam cartridge (20);
a first electrical power cord (52) extending from the docking station (14) to power the first foam generating assembly (30); and
a second electrical power cord (52) extending from the docking station (14) to power the second foam generating assembly (30).

13. The engine cleaning system (10) of claim 12, further comprising:
a battery (50) mounted to the docking station (14) for supplying power to the first foam generating assembly (30) through the first electrical power cord (52) and to the second foam generating assembly (30) through the second electrical power cord (52).

14. The engine cleaning system (10) of any preceding claim, further comprising:
a first cartridge adapter (46) configured to removably receive the first foam generating assembly (30); and
a first foam cartridge adapter (46) extending from the first cartridge adapter (46) for directing the first cleaning foam (34), wherein the first foam cartridge adapter (46) terminates at a borescope port adapter (48) configured for receipt within the first cleaning port (146) of the gas turbine engine (100).

15. A method (200) for operating an engine cleaning system (10) to clean a gas turbine engine (100), the method (200) comprising:
fluidly coupling a first foam cartridge (20) to a first cleaning port (146) of the gas turbine engine (100), the first foam cartridge (20) containing a first detergent (22);
fluidly coupling a second foam cartridge (20) to a second cleaning port (146) of the gas turbine engine (100), the second foam cartridge (20) containing a second detergent (22);
operating a first foam generating assembly (30) to generate and supply a first cleaning foam (34) from the first foam cartridge (20) to the first cleaning port (146) of the gas turbine engine (100); and
operating a second foam generating assembly (30) to generate and supply a second cleaning foam (34) from the second foam cartridge (20) to the second cleaning port (146) of the gas turbine engine (100), wherein the second cleaning foam (34) is different than the first cleaning foam (34).
